# EUROPEAN PATENT APPLICATION

(11) **EP 2 372 973 A2**
(43) Date of publication of application: **05.10.2011**
(21) Application number: 11157518.9
(22) Date of filing: 09.03.2011
(51) Int. Cl.: H04L 29/06

(54) **Updates with context information**

(30) Priority: 01.04.2010 US 320174 P; 28.04.2010 US 769079
(71) Applicant: Sony Ericsson Mobile Communications AB, 221 88 Lund (SE)
(72) Inventor: Jonsson, Håkan, 245 65, Hjärup (SE)
(74) Representative: VALEA AB

(57) **Abstract**

A mobile device may include sensors to collect context information, a network interface to communicate with a remote device, and a processor. The processor may be configured to obtain data and obtain, from the sensors or an application, context information associated with the data. In addition, the processor may be configured to parse the data based on the context information to obtain metadata associated with the data, and send the data and the metadata to the remote device.

## Description

### BACKGROUND

When a device (e.g., a cellular phone) exchanges data with another device (e.g., a server), the devices may also exchange metadata. The metadata describes the data and may aid the devices in automatically processing the data.

### SUMMARY

According to one aspect, a mobile device may include sensors to collect context information, a network interface to communicate with a remote device, and a processor. The processor may be configured to obtain data and obtain, from the sensors or an application, context information associated with the data. Additionally, the processor may be configured to parse the data based on the context information to obtain metadata associated with the data, and send the data and the metadata to the remote device.

Additionally, the sensors may include at least one of an acoustic sensor; Bluetooth transceiver; location sensor; temperature sensor; movement detecting components; infrared sensor; or power sensor.

Additionally, the context information may include a call log, measurement of battery power of user device, a list of Bluetooth peers, ambient temperature reading, ambient sound; contents of the device's communication with other devices, or a list of sites.

Additionally, when the processor parses the data, the processor may be further configured to at least one of extract entity name, segment text; disambiguate a word, or disambiguate a sentence boundary.

Additionally, the processor may be further configured to receive input for specifying a time window in which the context information is to be obtained.

Additionally, the processor may be further configured to select types of context information to be obtained.

Additionally, the metadata may exclude user-specified types of information.

Additionally, the metadata may include descriptions of identified symbols in the data.

Additionally, the data may include at least one of text, image data, audio data, or video data.

According to another aspect, a method may include receiving data, at a mobile device, collecting first context information from sensors, collecting second context information from applications, and parsing, at the mobile device, the data based on the first context information and the second context information to obtain metadata, the metadata excluding personal information in the first and second context data. Additionally, the method may also include associating the metadata with the data, sending the metadata and the data from the mobile device to a remote device, posting, at the remote device, the data via an application for sharing the data with multiple users, and storing the metadata and the data in a database at the remote device.

Additionally, excluding personal information may include at least excluding a telephone number or an address.

Additionally, posting the data may include posting the data at an Internet message board or a social networking website.

Additionally, parsing the data may include obtaining property-value pairs based on the data, the first context information, and the second context information.

Additionally, collecting the context information may include at least one of determining location, determining temperature, determining Bluetooth peers, or determining sound.

Additionally, the data may include a message from a user at the mobile device, a message from an application at the mobile device, or a message from another user device in communication with the mobile device.

Additionally, the method may further include parsing, by the remote device, the data based on the first context data and the second context data to obtain additional metadata. Additionally, the method may further include receiving user input for selecting different types of context information.

Additionally, the method may further include receiving user input for selecting information to exclude from the context information.

According to yet another aspect, a computer-readable medium may include computer-executable instructions. The computer-executable instructions may cause a processing device to receive data, at a user device, from a user, collect context information from sensors and applications, associate the context information with the data, send the context information and the data from the user device to a remote device, and post the data, at the remote device, via an application for sharing the data with multiple users. Additionally, the remote device may parse the data based on the context data to obtain metadata and stores the metadata and the data in a database at the remote device and the metadata may exclude personal information present in the context data.

Additionally, the context data may include a user log or list of web sites.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:
Fig. 1 illustrates concepts described herein;
Fig. 2 is a diagram of an exemplary network in which the concepts described herein may be implemented;
Figs. 3A and 3B are diagrams of an exemplary user device of Fig. 2;
Fig. 4 is a block diagram of components of an exemplary network device of Fig. 2;
Fig. 5 is a block diagram of exemplary functional components of the user device of Fig. 2;
Fig. 6 is a diagram of an exemplary graphical user interface (GUI) window of a communication application of the user device of Fig. 5;
Fig.7 is a block diagram of exemplary functional components of a server device of Fig. 2; and
Fig. 8 is a flow diagram of an exemplary process that is associated with the user device of Fig. 2.

### DETAILED DESCRIPTION

The following detailed description refers to the accompanying drawings. The same reference numbers in different drawings may identify the same or similar elements.

In the following, a user device that sends data to a server device may collect and send context information associated with the data. The user device may collect the context information via sensors or software components that are installed on the user device. The context information may allow the server device to extract information from the uploaded data. For example, assume that the user device uploads a text message containing a phrase "Inferno is bad" to a server device. In addition, assume that the user device sends, as context information, a list of places in which the user device has been located for the last 24 hours, and that the list includes a theater that plays a movie titled "Inferno." Based on the context information, the server device may parse (e.g., language identification, named entity extraction, text segmentation, word disambiguation, sentence boundary disambiguation, etc.) the text message to extract information about the movie "Inferno." The extracted information may be stored in a database and retrieved for different applications (e.g., a marketing application).

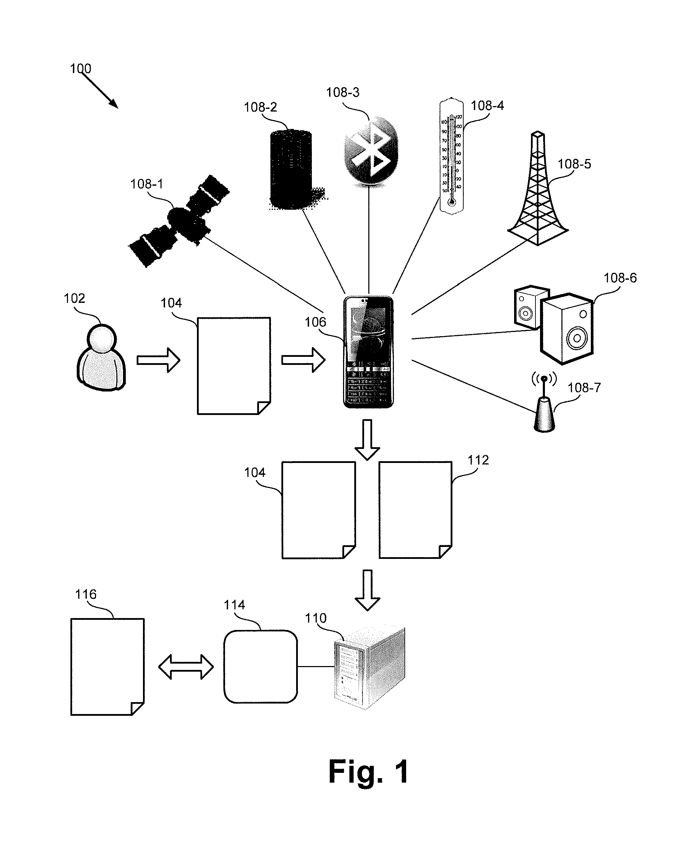

Fig. 1 illustrates concepts described herein. As shown, a system 100 may include a user device 106 and a server device 110. In system 100, a user 102 may input a text message 104 into user device 106. User device 106 may include context components, such as, for example, Global Positioning System receiver 108-1, power sensor 108-2, Bluetooth transceiver 108-3, temperature sensor 108-4, cell identifier 108-5, microphone/acoustic sensor 108-6, WiFi sensor 108-7, light sensor (not shown), call log (not shown), site history (not shown), etc.

User device 106 may continually collect context information from one or more of context components. For example, user device 106 may periodically determine its location via GPS receiver 108-1, amount of battery power of user device via power sensor 108-2, identities of Bluetooth peers via Bluetooth transceiver 108-3, ambient temperature via temperature sensor 108-4, the identity of the cell in which user device is located via radio transceiver/sensor 108-5, ambient sound via microphone/acoustic sensor 108-6, identity of the WiFi network to which user device is attached via WiFi sensor 108-7, contents of user device 106's communication with other mobile devices based on the user log, Universal Resource Locators (URLs) of sites that user device 106 visited, etc.

Once the context information has been collected, user device 106 may send text message 104 and context information 112 to server device 110. At server device 110, application 114 may store the text message 104, parse the received text message 104 based on the context information, and store the parsed message 116, text message 104 and context information 112 for later use (e.g., marketing research). In some implementations, for security reasons, user device 106 may process/filter context information 112 at user device 106 and send the processed information to server device 110.

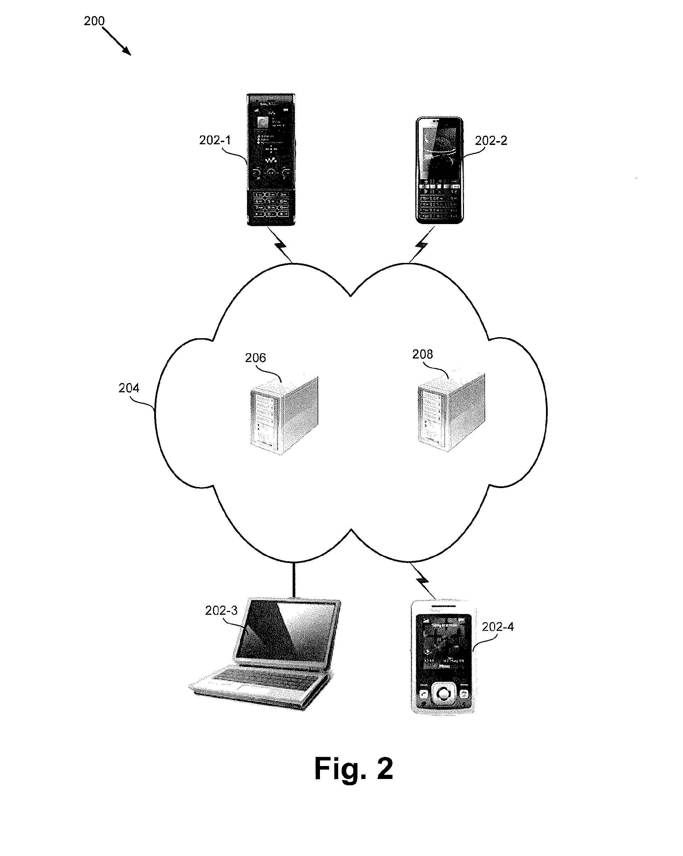

Fig. 2 is a diagram of an exemplary network 200 in which the concepts described herein may be implemented. As shown, network 200 may include user devices 202-1 through 202-4 (collectively referred to as user devices 202 and individually as user device 202-x), network 204, and server devices 206 and 208. Although not shown, network 200 may include other devices, such as wireless access points (WAPs), routers, switches, etc. Further, depending on the implementation, network 200 may include additional, fewer, or different devices than the ones illustrated in Fig. 2. For example, in some implementations, network 200 may include hundreds, thousands, or more of user devices 202.

User device 202-x may transmit and/or receive data to/from other user devices 202-x and/or server devices 206 and 208. In addition, user device 202-x may receive user input, collect context information, and send the user input and the context information to server device 206. In some implementations, user device 202-x may process the context information prior to its transmission, for security purposes or to reduce the amount of transmitted data (e.g., information collected within or associated with a certain time window)

Network 204 may include a fiber-optic network (e.g., passive optical networks (PONs)), an ad hoc network, a local area network (LAN), a wide area network (WAN), a wireless LAN, a metropolitan area network (MAN), a cellular network, a long term evolution (LTE) network, a public switched telephone network (PSTN), an intranet, the Internet, a satellite-based network, any other network, or a combination of networks. Devices that are shown in Fig. 2 may connect to network 204 via wireless, wired, or optical communication links. In addition, network 204 may allow any of devices 202-1 through 202-4, 206, and 208 to communicate with any of other devices 202-1 through 202-4, 206 and 208.

Server device 206 may receive data and context information from user device 202-x. In one implementation, server device 206 may use the context information to parse the received data and store the parsed data for later use. If the received context information already has been processed at user device 202-x, server device 206 may simply store the data and context information at an appropriate database.

Server device 208 may request information from server device 206. In response, server device 208 may allow server device 208 to perform database queries on the parsed data.

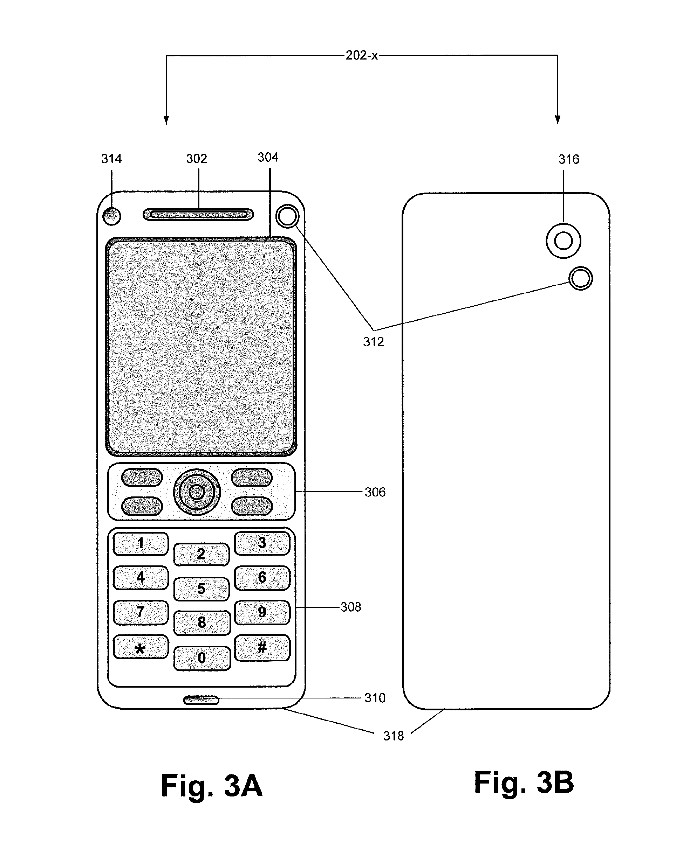

Fig. 3 is a diagram of an exemplary user device 202-x. User device 202-x may include any of the following devices: a mobile telephone; a cellular phone; a personal communications system (PCS) terminal that may combine a cellular radiotelephone with data processing, facsimile, and/or data communications capabilities; an electronic notepad, a laptop, a netbook, a tablet computer, an ultra mobile personal computer (UMPC), and/or a personal computer with wireless or wireline communication capabilities; a personal digital assistant (PDA) that can include a telephone; a gaming device or console; a peripheral (e.g., wireless headphone); a digital camera; or another type of computational or communication device.

In this implementation, user device 202-x may take the form of a mobile phone (e.g., a smart phone). As shown in Fig. 3, user device 202-x may include a speaker 302, a display 304, control buttons 306, a keypad 308, a microphone 310, sensors 312, a front camera 314, a rear camera 316, and a housing 318.

Speaker 302 may provide audible information to a user of user device 202-x. Display 304 may provide visual information to the user, such as an image of a caller, video images, or pictures. In addition, display 304 may include a touch screen for providing input to user device 202-x. Control buttons 306 may permit the user to interact with user device 202-x to cause user device 202-x to perform one or more operations, such as place or receive a telephone call. Keypad 308 may include a telephone keypad. Microphone 310 may receive audible information from the user. Sensors 312 may collect and provide, to user device 202-x, information (e.g., acoustic, infrared, etc.) that is used to aid the user in capturing images or in providing other types of information (e.g., a distance between a user and user device 202-x). Front and rear cameras 314 and 316 may enable a user to view, capture and store images (e.g., pictures, videos) of a subject in front/back of user device 202-x. Housing 318 may provide a casing for components of user device 202-x and may protect the components from outside elements.

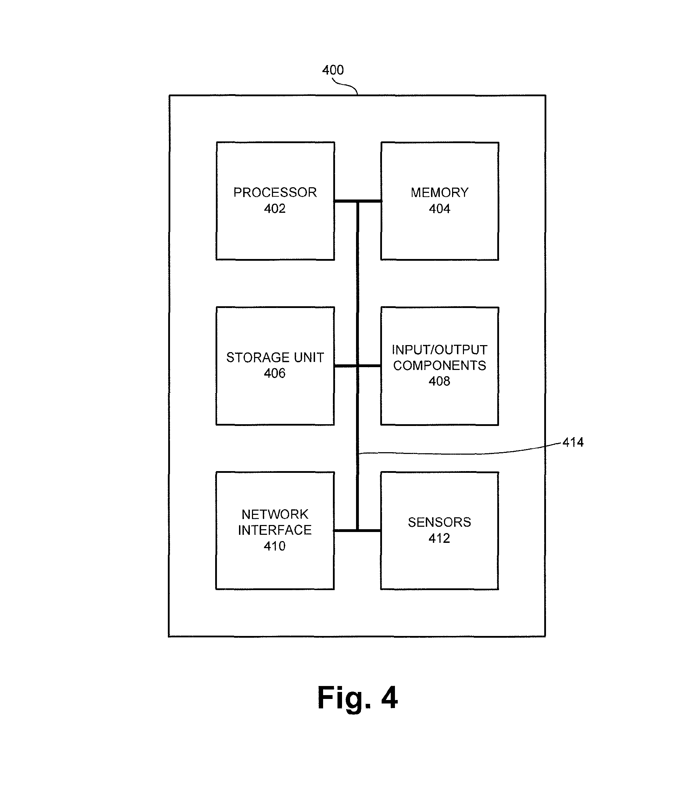

Fig. 4 is a block diagram of a network device 400, which may represent any of user devices 202 and communication server devices 206 and 208. As shown in Fig. 4, network device 400 may include a processor 402, a memory 404, a storage unit 406, input/output components 408, a network interface 410, sensors 412, and a communication path 414. In different implementations, device 400 may include additional, fewer, or different components than the ones illustrated in Fig. 4. For example, device 400 may include additional network interfaces, such as interfaces for receiving and sending data packets.

Processor 402 may include a processor, a microprocessor, an Application Specific Integrated Circuit (ASIC), a Field Programmable Gate Array (FPGA), and/or other processing logic (e.g., audio/video processor) capable of processing information and/or controlling network device 400. Memory 404 may include static memory, such as read only memory (ROM), and/or dynamic memory, such as random access memory (RAM), or onboard cache, for storing data and machine-readable instructions. Storage unit 406 may include a magnetic and/or optical storage/recording medium. In some implementations, storage unit 406 may be mounted under a directory tree or mapped to a drive.

Input/output components 408 may include a display screen (e.g., display 304, etc.), a keyboard, a mouse, a speaker, a microphone, a Digital Video Disk (DVD) writer, a DVD reader, Universal Serial Bus (USB) lines, and/or other types of components for converting physical events or phenomena to and/or from digital signals that pertain to network device 400.

Network interface 408 may include a transceiver that enables network device 400 to communicate with other devices and/or systems. For example, network interface 408 may communicate, via a network, such as the Internet, a terrestrial wireless network (e.g., a WLAN), a cellular network, a satellite-based network, a wireless personal area network (WPAN), etc. Additionally or alternatively, network interface 408 may include a modem, an Ethernet interface to a LAN, and/or an interface/ connection for connecting network device 400 to other devices (e.g., a Bluetooth interface).

Sensors 412 may include, for example, power sensor 108-2, temperature sensor 108-4, microphone/acoustic sensor 108-6, sensors 312, etc. Sensors 412 may collect and provide, to network device 400, information (e.g., acoustic, infrared, etc.) about state of device 400 and/or its surroundings. In some implementations, sensors 412 may also include position/movement/orientation detecting components, such as an electronic gyroscope or an accelerometer.

Communication path 414 may provide an interface through which components of network device 400 can communicate with one another.

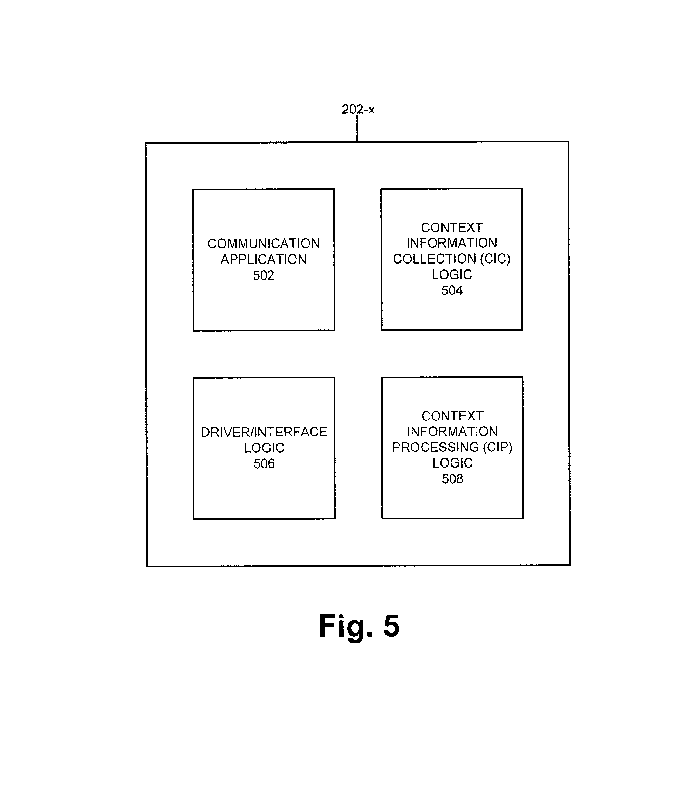

Fig. 5 is a block diagram of exemplary functional components of user device 202-x. As shown, user device 202-x may include communication application 502, context information collection (CIC) logic 504, driver/interface logic 506, and context information processing (CIP) logic 508. Depending on the implementation, user device 202-x may include additional, fewer, or different functional components than those illustrated in Fig. 5. For example, user device 202-x may include an operating system, document application, game application, etc. In another example, CIC logic 504 may be integrated as part of communication application 502.

Communication application 502 may include an application (e.g., a browser, a stand-alone application, a messaging client, etc.) for sending and/or receiving data (e.g., user input) and/or context information from/at user device 202-x. In some implementations, communication application 406 may obtain the context information from CIC logic 504 and/or CIP logic 506. Via communication application 502, a user of user device 202-x may update data at server device 206 or other user devices 202.

CIC logic 504 may collect context information via sensors 412 and driver/interface logic 506, and provide the context information to communication application 502. In some configurations, CIC logic 504 may use CIP logic 508 to process data received from communication application 502 (e.g., user input) and the context information, for example, for bandwidth or security reasons, and relay the processed information to communication application 502.

CIC logic 504 may collect the context information of user device 202-x via software components that are associated with hardware components (e.g., GPS receiver 108-1, power sensor 108-2, Bluetooth transceiver 108-3, ambient temperature sensor 108-4, radio transceiver/sensor 108-5, microphone/acoustic sensor 108-6, WiFi transceiver/sensor 108-7, infrared sensor, etc.) via driver/interface 506.

As described above with reference to Fig. 1, the context information may include the position/location information, readings from power sensor 108-2, identities of Bluetooth peers, ambient temperature, the identity of the cell in which user device 202-x is located, ambient sound, identity of the WiFi network to which user device 202-x may be attached, etc.

In some implementations, CIC logic 504 may also collect context information of user device 202-x from other software applications. For example, CIC logic 504 may obtain a list of web sites that a browser in user device 202-x visited; documents that have been recently created/edited at user device 202-x; emails, text messages, images, and/or other files/data that have been recently sent from user device 202-x; voice messages that have been recorded; etc.

Driver/interface logic 506 may include components for other software components to interact with hardware components, such as sensors 412, input/output components 408, storage unit 406, network interface 410, etc.

CIP logic 508 may process user input and the context information that have been collected by CIC logic 504. When CIC logic 504 requests CIP logic 508 to process user input and the context information that CIC logic 504 obtained, CIP logic 508 may parse the user input based on the context information and provide the parsed information to CIC logic 504. The parsed information may include identified symbols (e.g., words) in the user input and metadata that describes the symbols (e.g., extracted named entity), text segmentation, word disambiguation, sentence boundary disambiguation, etc.

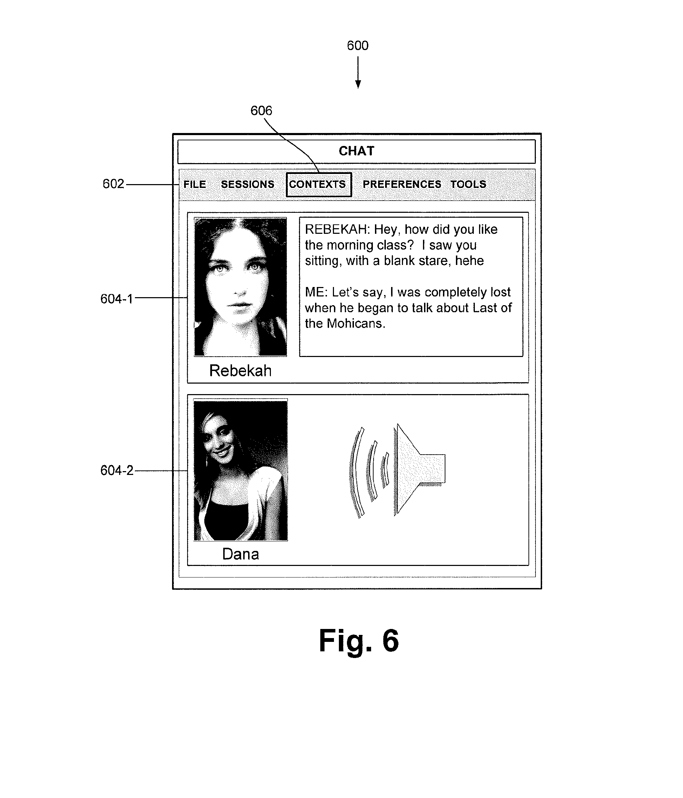

Fig. 6 is a diagram of an exemplary graphical user interface (GUI) window 600 of communication application 502. As shown, GUI window 600 may include a menu bar 602 and video session windows 604-1 and 604-2 (collectively referred to as video session windows 604 and individually as video session window 604-x). Depending on the implementation, GUI window 600 may include additional, fewer, or different components than those illustrated in Fig. 6.

Menu bar 602 may allow a user to conduct communication sessions (e.g., start a session and/or an end a session) with user devices 202 and/or server device 206. For example, in one implementation, the user may navigate through a menu tree via menu bar 602 to initiate a texting session or a conference based on a list of friends of the user. In another example, the user may send a transcript of the communication with another user to server device 206.

In addition, menu bar 602 may allow the user to perform operations that are associated with a session. For example, the operations may include saving a session as a file (e.g., video, text, or audio, etc.), replaying a saved session, editing a saved session, modifying parameters that are associated with a current or future session (e.g., a list of friends that may participate in a session).

In another example, the operations may include selecting types of context information (e.g., information from one or more of sensors 412 and/or applications), changing a time window(s) in which the context information is captured, selecting whether the context information is to be processed before the information is transmitted to another device (e.g., server device 206), etc.

In yet another example, the user may also specify, via GUI window 600 what types of information may be prevented from being sent from user device 202-x. For example, the user may specify that user's address and/or phone number may be distributed only to friends or acquaintances, and not to a web site on server device 206.

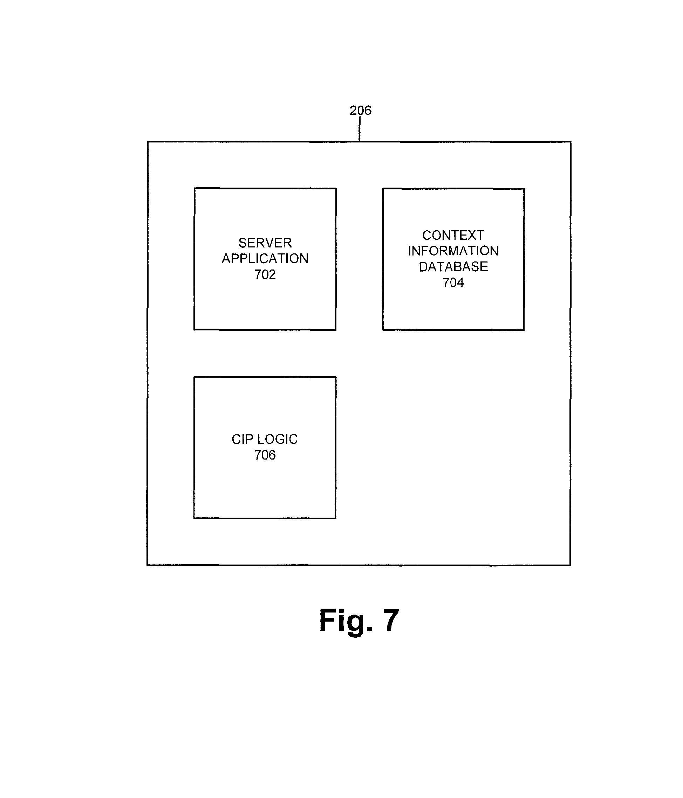

Fig.7 is a block diagram of exemplary functional components of server device 206. As shown, server device 206 may include server application 702, a context information database 704, and CIP logic 706. Depending on the implementation, server device may include additional, fewer, or different functional components than those illustrated in Fig. 7. For example, server device 206 may include an operating system, an email server, a firewall, etc. In another example, context information database 704 may not include server application.

Server application 702 may provide a service to one or more applications on user device 202-x. For example, server application 702 may receive data from user device 202-x (e.g., a user log describing user activity, a photograph, etc.), post the data at an Internet message board, a social networking website, or another type of information sharing server application, and allow the user to share the data with other users (e.g., let other users view the log).

In addition, server application 702 may receive context information along with the data, process the data and the context information via CIP logic 706, and store the data, the context information and/or the processed information in context information database 704. Furthermore, when server application 702 receives a request from another application, user device 202-x, or server device 208, may retrieve/provide the data, the context information, and/or the processed information.

Context information database 704 may store/retrieve the data, the context information, and/or the processed information. The data may include text, image, documents, and/or audio data. The context information may include information that is sent from user device 202-x. As described above, the context information may include data/ information from sensors 412, software components, etc. The processed information may include a reference to a piece (e.g., a word in text or audio clip, a paragraph, a piece of image, etc.) of the data. The processed information may also include metadata describing the piece of data. For example, assume that the data is "Inferno is a great movie," context information is "Uptown Theater," which is the name of a movie theater that a user visited on March 2, 2010. Context information database 704 may store, for user device 202-x (or an identifier associated with an account for the user of user device 202-x), data "Inferno is a great movie" and context data "Location: Uptown Theater, March 2, 2010."

CIP logic 706 may process, when requested by an application (e.g., server application 702), data and context information associated with the data. The processed information may be stored, by CIP logic 706 or by the application, in context information database 704.

For example, assume that server application 702 requests CIP logic 706 to process data "Inferno is a great movie" and context information "Location: Uptown Theater, March 2, 2010." CIP logic 706 may determine a type of location, and upon determining that the location is a theater, may identify movies that are scheduled to play. Furthermore, CIP logic 706 may attempt to match each of the word in "Inferno is a great movie" to one of the names of the movies. Upon finding a match, CIP logic 706 may associate the word "Inferno" with metadata "movie" (i.e., a tag identifying a type of object) to generate a string: "Inferno - movie"). When server application 702 receives the processed information, "Inferno - movie," server application 702 may associate the processed information with "Inferno is a great movie" and store the association and the processed information in database 704.

Depending on the types of data and context information, CIP logic 706 may process data differently. For example, CIP logic 706 may handle text data differently from images or audio data. In another example, when the context data is a speech clip, CIP logic 706 may attempt to identify each of the words in the speech and parse the data based on the words.

In many ways, CIP logic 706 may operate similarly as CIP logic 508. However, whereas CIP logic 508 processes data for single user device 202-x, CIP logic 706 may handle data and context information for multiple user devices 202.

### EXEMPLARY PROCESSES

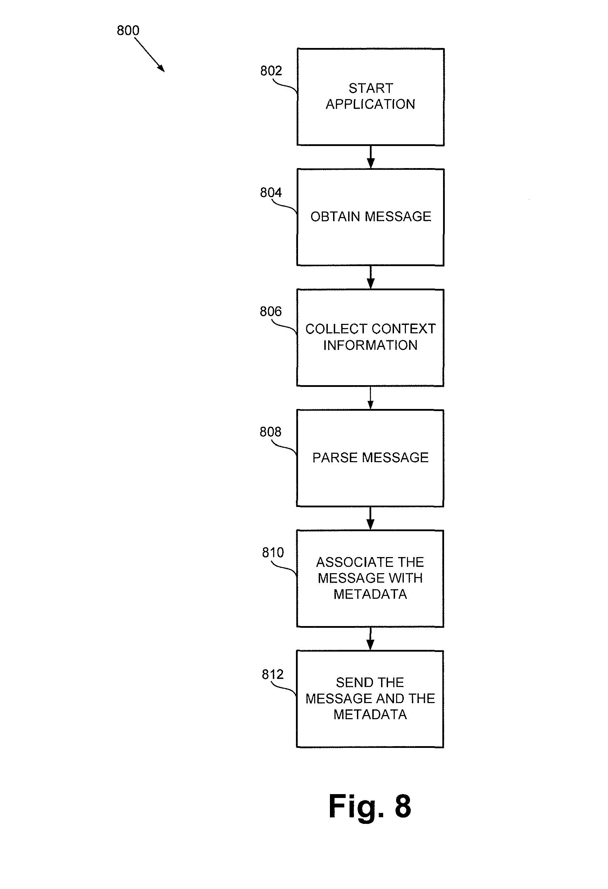

Fig. 8 is a flow diagram of an exemplary process 800 that is associated with user device 202-x. Assume that user device 202-x has been and is collecting context information. Process 800 may begin with launching or starting communication application 502 in user device 202-x (block 802). For example, a user may launch communication application 502 by activating a menu item.

Communication application 502 may obtain a message (block 804). The message may be audio, text, video, image, etc. In some instances, the message may be received from a user, and in other instances, from an application or another user device 202-y. For example, John may start communication application 502 at user device 202-x and decide to upload, to server device 206, text messages between John and Jane, a user of another device 202-y.

User device 202-x may collect context information (block 806) as described above. At block 808, user device 202-x may parse the message based on the context information (block 808). In parsing the message, CIP logic 508 in user device 202-x may use the context information to obtain values for properties that are associated with different user activities or state of user device 202-x.

For example, assume that one property of user device 202-x is "location." CIP logic 508 may obtain a value for the location in longitude and latitude from GPS receiver installed in user device 202-x.

For each value, CIP logic 508 may determine if there are additional properties, and for each property, CIP logic 508 may determine different values. Further, for each of these values, CIP logic 508 may determine properties, etc. CIP logic 508 may iterate through a process of determining property-value pairs for multiple times.

For example, assume that user device 202-x determines, via a GPS receiver installed in user device 202-x, a value that is associated with a location property as a pair of longitude and latitude, (39.08,-77.02). For the value (39.08,-77.02) in longitude and latitude, user device 202-x may then determine additional properties.

Assume that one property of a geographical coordinate is the name of a building. Using a map, user device may determine that the name of the building at (39.08, -77.02) is "Uptown Theater"; a property associated with "Uptown theater" is "a type of establishment"; a value of the type of establishment is "theater"; properties associated with "theater" are "movies"; values associated with movies are names movies playing at Uptown Theater; a property for a movie is a "scheduled play time": etc.

In determining a chain or a set ofproperty-value pairs from the context information, CIP logic 508 may use different techniques for different properties. For example, for determining a location, CIP logic 508 may use the GPS receiver. For determining a type of building, CIP logic 508 may perform a lookup in a table. For determining a play time of a movie, CIP logic 508 may look up a movie schedule at a site.

In another example, assume that CIP logic 508 is parsing a message to Rebekah "I was completely lost when he began to talk about Last of the Mohicans" (see Fig. 6) based on a list of web sites that have been recently visited by a user at user device 202-x. Also assume that the web sites include a search site for music, and a property for the site is "music site." In such a case, CIP logic 508 may determine (e.g., via the web site) that "Last of the Mohicans" is a song by performing a search in a dictionary and (e.g., identify the phrase) and then looking up the phrase "Last of the Mohicans" at the search site for music. That is, the value "Last of Mohicans" may be used to obtain another value for the property "music site."

User device 202-x may associate the message with metadata (block 810). For example, CIC logic 504 and/or CIP logic 508 may tag or associate "Last of the Mohicans" with the metadata "book title."

At block 812, user device 202-x may send the metadata and the message to server device 206. In response, server device 206 may update and publish user blog, album, or any type shareable media. In addition, server device 206 may store the message and the metadata in context information database 704.

In Fig. 8, user device 202-x is shown as parsing the message and context information. In some implementations, user device 202-x may perform additional processing for security purposes. For example, if the message (the data) and/or context information includes personal information (e.g., a password, user's address, etc.), CIP logic 508 may remove it from the message, the context information, and/or the processed information (e.g., the metadata). Alternatively, CIP logic 508 may block such information from being transmitted.

In some implementations, user device 202-x may not process the message and the context information. In such implementations, user device 202-x may send the message and the context information to server device 206 in raw form. In such implementations, CIP logic 706 in server device 206 may process the message and the context information to obtain the metadata. CIP logic 706 may also associate and store the message, context information, and the metadata.

### CONCLUSION

The foregoing description of implementations provides illustration, but is not intended to be exhaustive or to limit the implementations to the precise form disclosed. Modifications and variations are possible in light of the above teachings or may be acquired from practice of the teachings.

For example, while a series of blocks have been described with regard to the exemplary process illustrated in Fig. 8, the order of the blocks may be modified in other implementations. In addition, non-dependent blocks may represent acts that can be performed in parallel to other blocks. Further, depending on the implementation of functional components, some of the blocks may be omitted or different blocks added.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code - it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software.

No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A mobile device (106) comprising:
sensors (312) to collect context information;
a network interface (410) to communicate with a remote device; and
a processor (402) to:
obtain data;
obtain, from the sensors (312) or an application, context information associated with the data;
parse the data based on the context information to obtain metadata associated with the data; and
send the data and the metadata to the remote device.

2. The mobile device (106) of claim 1, wherein the sensors (312) include at least one of:
an acoustic sensor (108-6); Bluetooth transceiver (108-3); location sensor (108-1);
temperature sensor (108-4); movement detecting components; infrared sensor; or power sensor (108-2).

3. The mobile device (106) of claim 1 or 2, wherein the context information includes:
a call log; measurement of battery power of user device; a list of Bluetooth peers;
ambient temperature reading; ambient sound; contents of the device's communication with other devices; or a list of sites.

4. The mobile device (106) of any one of claims 1 - 3, wherein when the processor (402) parses the data, the processor (402) is further configured to at least one of:
extract entity name; segment text; disambiguate a word; or disambiguate a sentence boundary.

5. The mobile device (106) of any one of claims 1 - 4, wherein the processor (402) is further configured to:
receive input for specifying a time window in which the context information is to be obtained.

6. The device (106) of any one of claims 1 - 5, wherein the processor (402) is further configured to select types of context information to be obtained.

7. The device (106) of any one of claims 1 - 6, wherein the metadata excludes user-specified types of information.

8. The device (106) of any one of claims 1 - 7, wherein the metadata includes descriptions of identified symbols in the data.

9. The device (106) of any one of claims 1 - 8, wherein the data includes at least one of:
text; image data; audio data; or video data.

10. A method comprising:
receiving data, at a mobile device (202);
collecting (806) first context information from sensors (312);
collecting (806) second context information from applications;
parsing (808), at the mobile device, the data based on the first context information and the second context information to obtain metadata, the metadata excluding personal information in the first and second context data;
associating (810) the metadata with the data;
sending (812) the metadata and the data from the mobile device to a remote device;
posting, at the remote device, the data via an application for sharing the data with multiple users; and
storing the metadata and the data in a database at the remote device.

11. The method of claim 10, wherein excluding personal information includes at least excluding a telephone number or an address.

12. The method of claim 10 or 11, wherein posting the data includes posting the data at an Internet message board or a social networking website.

13. The method of any one of claims 10 - 12, wherein parsing the data includes obtaining property-value pairs based on the data, the first context information, and the second context information.

14. The method of any one of claims 10 - 13, wherein collecting the context information includes at least one of determining location, determining temperature, determining Bluetooth peers, or determining sound.

15. The method of any one of claims 10 - 14, further comprising:
parsing, by the remote device, the data based on the first context data and the second context data to obtain additional metadata.
